# EUROPÄISCHE PATENTANMELDUNG

(11) **EP 4 120 516 A1**
(43) Veröffentlichungstag der Anmeldung: **18.01.2023**
(21) Anmeldenummer: 22180950.2
(22) Anmeldetag: 24.06.2022
(51) Int. Cl.: H02K 1/276

(54) **ELEKTRISCHE MASCHINE MIT PERMANENTMAGNETROTOR**

(30) Priorität: 08.07.2021 DE 102021117625
(71) Anmelder: KNORR-BREMSE Systeme für Nutzfahrzeuge GmbH, 80809 München (DE)
(72) Erfinder: STANKOVIC, Dordo, 71679 Asperg (DE); BONTINCK, Zeger, 75417 Mühlacker (DE); MATHÄ, Noel, 70437 Stuttgart (DE)

(57) **Zusammenfassung**

Die Erfindung betrifft eine permanenterregte Elektromaschine (1), die einen Stator (17) und einen innerhalb des Stators (17) zusammen mit einer Welle (5) um eine Rotationsachse (14) drehbaren Rotor umfast. Dabei ist zwischen der radial äußeren Umfangsfläche (30) des Rotors (4) und der radial inneren Umfangsfläche des Stators (17) ein Luftspalt (21) ausgebildet, und in dem Rotorkörper (10) des Rotors (4) sind Ausnehmungen (13) ausgebildet. In zumindest einigen der Ausnehmungen (13) sind Permanentmagnete (15) aufgenommen. Gemäß der Erfindung ist vorgesehen, dass die Ausnehmungen (13), in welchen Permanentmagneten (15) aufgenommen sind, zum Luftspalt (21) hin offen sind. Durch diese Maßnahme wird der magnetische Streufluss verringert und damit der Wirkungsgrad der permanentmagnetisch erregten Elektromaschine verbessert.

## Beschreibung

Die Erfindung betrifft eine permanenterregte Elektromaschine, beinhaltend einen Stator und einen innerhalb des Stators zusammen mit einer Welle um eine Rotationsachse drehbaren Rotor gemäß dem Oberbegriff von Anspruch 1. Weiterhin betrifft die Erfindung auch ein Fahrzeug mit einer solchen permanenterregten Elektromaschine gemäß Anspruch 16.

Eine solche Elektromaschine ist aus DE 10 2013 206 418 A1 bekannt. Dort sind in Rotorlamellen eines aus mehreren Rotorlamellen bestehenden Rotors Nuten ausgebildet, in denen Permanentmagnet aufgenommen sind. Zwischen den Nutaußenrändern und einem Rotoraußenprofil sind sogenannte Brücken ausgebildet, welche die Nuten überbrücken und dadurch die Bereiche der Rotorlamellen neben den Nuten miteinander verbinden.

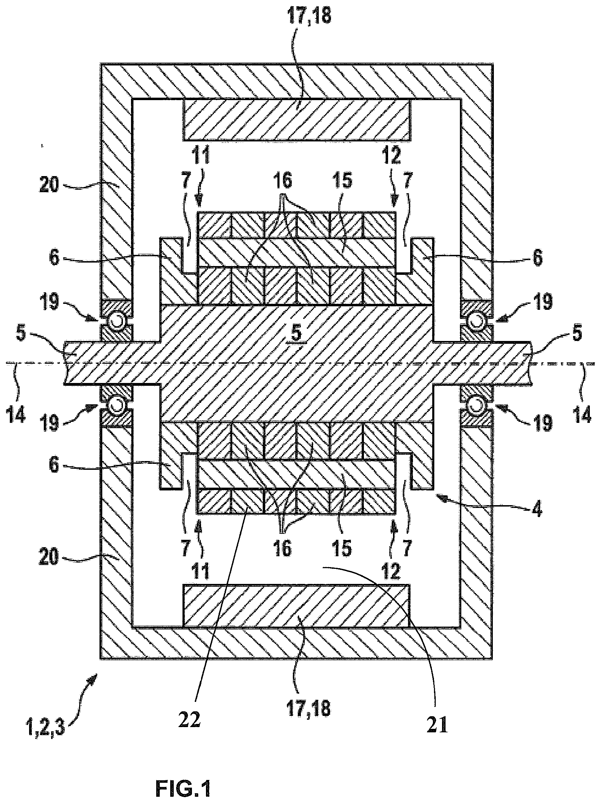

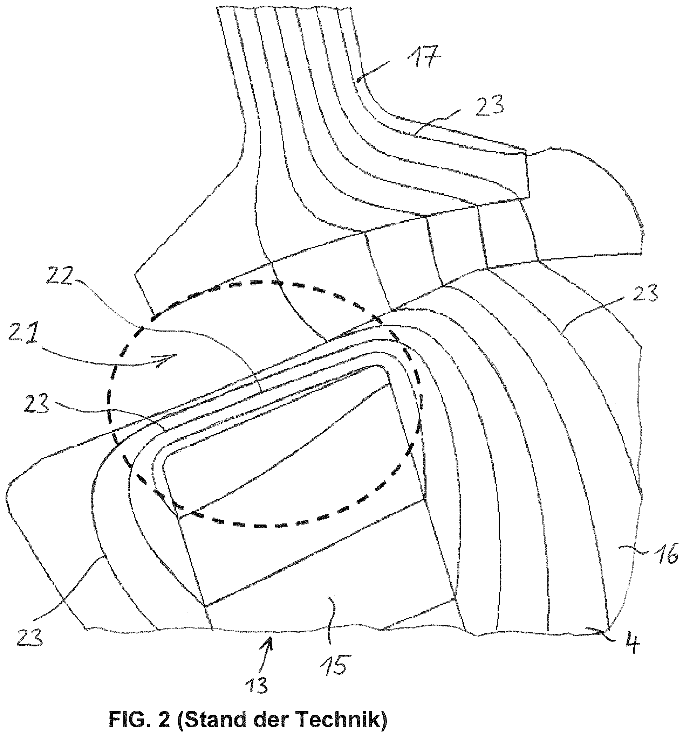

Weiterhin wird auch in DE 10 2009 047 677 A1 eine derartige Elektromaschine offenbart. **Fig. 1** zeigt die dort beschrieben Elektromaschine 1 des Stands der Technik, die als Elektromotor 2 oder Generator 3 eingesetzt werden kann. Die Elektromaschine 1 weist eine um eine Rotationsachse 14 rotierende Welle 5 auf. An der Welle 5 aus Stahl sind von einer nichtdargestellten Isolierung umgebene Lamellen 16 in axialer Richtung der Rotationsachse 14 übereinander zu einem Lamellenpaket angeordnet oder geschichtet. Die Lamellen 16 bzw. das Lamellenpaket weisen dabei axiale Ausnehmungen 13 **(****Fig. 2****)** auf, in denen Permanentmagnete 15 angeordnet sind. Ein Rotor 4 der Elektromaschine 1 umfasst somit die Welle 5, die Permanentmagnete 15, die Lamellen 16 und ferner zwei Auswuchtscheiben 6. Der Rotor 4 weist dabei einen ersten Endabschnitt 11 und einen zweiten Endabschnitt 12 auf. Jeweils an dem ersten und zweiten Endabschnitt 11, 12 ist dabei die Auswuchtscheibe 6 angeordnet. Die Auswuchtscheibe 6 aus Metall, insbesondere Stahl, dient dazu, Unwuchten an dem Rotor 4 auszugleichen. Die Auswuchtscheiben sind an einer Seite mit einer Aussparung 7 versehen. Die Welle 5 ist mittels einer Wälzlagerung 19 an einem Gehäuse 20 der Elektromaschine 1 gelagert. An dem Gehäuse 20 ist ein Stator 17 mit Elektromagneten 18 angeordnet. Zwischen dem Stator 17 und dem Rotor 4 ist ein Luftspalt 21 ausgebildet.

Bedingt durch die axialen Ausnehmungen der Lamellen 16, in den die Permanentmagnete 15 gehalten sind, werden die Permanentmagnete 15 in einer Querschnittsebene senkrecht zur Rotationsachse 14 gesehen radial außen durch eine sogenannte "Brücke" 22 je Lamelle 16 überspannt. Diese "Brücken" 22 der Lamellen 16 fixieren daher die Permanentmagneten 15 in ihrer Position, wenn sich der Rotor 4 um die Rotationsachse dreht. Die Brücken 22 dienen daher dazu, die mechanische Stabilität der Lamellen 16 zu gewährleisten, indem sie die die radial äußeren Bereiche der Lamellen 16 neben den Permanentmagneten 15 miteinander verbinden.

In **Fig. 2** ist eine solche Ausnehmung 13 in einer Lamelle 16 mit einem darin aufgenommenen Permanentmagneten 15 und einer solchen Brücke 22, welche in dem durch den gestrichelten Kreis gekennzeichneten Bereich beim Stand der Technik vorhanden ist, in der Querschnittsebene senkrecht zur Rotationsachse 14 gezeigt. Weiterhin sind in **Fig. 2** auch die magnetischen Flusslinien 23 des Magnetfelds der Permanentmagneten 15 gezeigt. Dabei ist zu erkennen, dass die magnetischen Flusslinien 23 auch entlang der Brücke 22 laufen. Die Brücken 22 verursachen daher einen Streufluss und reduzieren damit den Wirkungsgrad der Elektromaschine 1. Ein Entfernen der Brücken 22 bei allen Lamellen 16 könnte aber aus den oben genannten Gründen zu strukturellen Problemen bei höheren Drehzahlen des Rotors 4 führen, weil dann relativ große Fliehkräfte auf die Permanentmagneten 15 wirken.

Gerade bei Elektromotoren mit Permanentmagneten, wie bürstenlosen Gleichstrommotoren (BLDC) und Permanentmagnet-Synchronmotoren (PMSM) ist aber eine Konzentration des magnetischen Flusses zum Luftspalt hin wünschenswert, um eine effiziente Nutzung der Permanentmagnete zu erreichen.

Der vorliegenden Erfindung liegt demgegenüber die Aufgabe zugrunde, eine permanenterregte Elektromaschine der eingangserwähnten Art derart weiterzubilden, dass sie einen höheren Wirkungsgrad bei hoher Stabilität aufweist. Weiterhin soll auch ein Fahrzeug mit einer solchen permanenterregten Elektromaschine zur Verfügung gestellt werden.

Diese Aufgabe wird erfindungsgemäß durch die Merkmale der Ansprüche 1 und 16 gelöst.

### Offenbarung der Erfindung

Die Erfindung geht aus von einer permanenterregten Elektromaschine, beinhaltend einen Stator und einen innerhalb des Stators zusammen mit einer Welle um eine Rotationsachse drehbaren Rotor, wobei zwischen einer radial äußeren Umfangsfläche des Rotors und einer radial inneren Umfangsfläche des Stators ein Luftspalt ausgebildet ist, und wobei in einem Rotorkörper des Rotors Ausnehmungen ausgebildet sind, und in wenigstens einigen der Ausnehmungen Permanentmagnete aufgenommen sind.

Die Elektromaschine kann insbesondere als Elektromotor oder als Generator ausgebildet sein. Die Permanentmagnete sind insbesondere mehrpolig magnetisiert.

Gemäß der Erfindung ist vorgesehen, dass die Ausnehmungen, insbesondere alle Ausnehmungen, in welchen Permanentmagnete aufgenommen sind, zum Luftspalt hin offen sind. Mit anderen Worten weist dann wenigstens ein Teil einer radial äußeren Oberfläche der Permanentmagneten eine direkte Verbindung zum Luftspalt auf. Damit wird auf die oben beschriebenen Brücken des Stands der Technik verzichtet. Der Rotorkörper wird daher ohne solche Brücken ausgeführt. Durch diese Maßnahme wird der magnetische Streufluss verringert und damit der Wirkungsgrad der elektrischen Maschine verbessert.

In den Unteransprüche werden vorteilhafte Weiterbildungen der Erfindung offenbart.

Zur Vermeidung der Brücken des Stands der Technik können beispielsweise an einer äußeren Umfangsfläche des Rotorkörpers Öffnungen ausgebildet sein, welche einerseits in die Ausnehmungen und andererseits in den Luftspalt münden. In den Öffnungen sind insbesondere keine magnetisch leitfähigen Elemente angeordnet oder vorhanden.

Dabei kann ein Rand der Öffnungen jeweils derart radial vorspringen, dass die in den Ausnehmungen aufgenommenen Permanentmagneten jeweils teilweise übergriffen werden, insbesondere unter Freilassen der betreffenden Öffnung durch den Rand. Durch die Ränder der Öffnungen sind daher die Permanentmagneten an ihren radial äußeren Enden in den Öffnungen formschlüssig gehalten oder gekontert. Die radial inneren Enden der Permanentmagneten können aus den Ausnehmungen nach radial innen hin herausragen und einen Nabenkörper kontaktieren, welcher mit der Welle zumindest drehfest verbunden ist und welcher den Rotorkörper drehfest trägt. Dann sind die Permanentmagneten radial außen durch die Ränder der Öffnungen und radial innen durch den Nabenkörper fixiert. Die Ausnehmungen in dem Rotorkörper können sich beispielsweise von dem Nabenkörper bis zu den Öffnungen im Rotorkörper erstecken.

Auch können die Permanentmagneten und insbesondere die Ausnehmungen speichenartig um die Rotationsachse des Rotors angeordnet sein.

Auch kann der Rotorkörper Segmente aus wenigstens einem Metall umfassen, welche speichenartig um die Rotationsachse des Rotors angeordnet und in Umfangsrichtung des Rotors gesehen den Permanentmagneten zwischengeordnet sind. Insbesondere können die Segmente separate Segmente sein und jeweils aus mehreren Lamellen bestehen, insbesondere aus Stahllamellen. Daher können die Segmente aus Stahl bestehen oder Stahl beinhalten.

Auch können die Segmente an ihrer radial inneren Umfangsfläche mit dem Nabenkörper verbunden sein, welcher mit der Welle zumindest drehfest verbunden ist und welcher den Rotorkörper drehfest trägt. Der Rotorkörper ist mit dem Nabenkörper daher zumindest drehfest verbunden.

Insbesondere können die Segmente mit dem Nabenkörper formschlüssig und/oder kraftschlüssig (z.B. durch Verschraubungen oder Klemmungen) und/oder stoffschlüssig (z.B. durch Klebungen) verbunden sein.

Zur Ausbildung einer formschlüssigen Verbindung zwischen dem Nabenkörper und den Segmenten, kann der Nabenkörper radial äußere Haken aufweisen, welche mit komplementär hakenförmig geformten Ausnehmungen an der radial inneren Umfangsfläche der Segmente derart zusammenwirken, dass zwischen den Haken und den Ausnehmungen jeweils ein Formschluss mit hinterschnittenem Querschnitt ausgebildet wird.

Die oben genannten formschlüssigen und/oder kraftschlüssigen und/oder stoffschlüssigen Verbindungen zwischen dem Nabenkörper und den Segmenten ermöglichen insbesondere eine Realisierung des gesamten Rotorkörpers durch separate, speichenartig angeordnete Segmente. Durch diese Segmentierung kann mehr Material aus einer Stahlplatte gestanzt werden als bei dem Verfahren, bei dem der gesamte Rotorbereich in einem Stück ausgestanzt wird. Dies bedeutet eine Steigerung der Effizienz des Materialeinsatzes bei der Produktion. Außerdem wird nur ein Stanzwerkzeug für das Stanzen aller Segmente oder Segmentbleche benötigt. Außerdem halten die Verbindungen die Segmente in ihrer Position, was gerade bei hohen Drehzahlen des Rotors entscheidend ist.

Gemäß einer Weiterbildung kann der Nabenkörper aus einem diamagnetischen und/oder paramagnetischen Material bestehen, insbesondere aus Aluminium.

Gemäß einer bevorzugten Weiterbildung kann die permanenterregte Elektromaschine als ein bürstenloser Gleichstrommotor (BLDC) oder als ein Permanentmagnet-Synchronmotor (PMSM) ausgeführt sein.

Weiterhin offenbart die Erfindung auch ein Fahrzeug mit einer oben beschriebenen permanenterregten Elektromaschine.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig. 3: eine schematische Querschnittsdarstellung eines Rotors einer bevorzugten Ausführungsform der permanenterregten elektrischen Maschine gemäß der Erfindung;
- Fig. 4: einen Ausschnitt aus Fig. 1, welcher einen in einer Ausnehmung eines Rotorkörpers eines Rotors aufgenommenen Permanentmagneten sowie magnetische Flusslinien des Magnetfelds des Permanentmagneten zeigt;
- Fig. 5: ein Diagramm, in welchem ein Zusammenhang zwischen einem von der elektrischen Maschine gemäß der Erfindung erzeugten Drehmoment und einer Winkelposition des Rotors gegenüber einer elektrischen Maschine des Stands der Technik dargestellt ist;

### Beschreibung des Ausführungsbeispiels

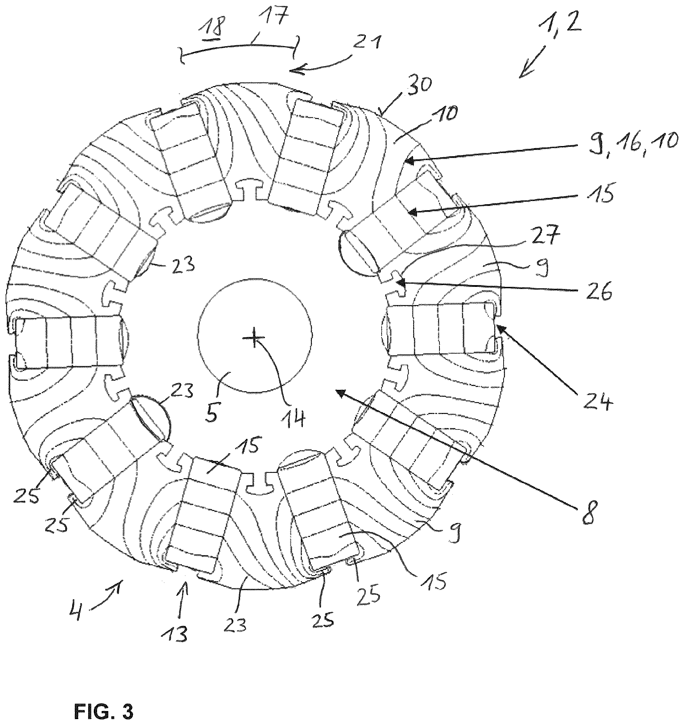

Die in **Fig. 3** teilweise gezeigte permanenterregte Elektromaschine 1 stellt beispielsweise einen permanenterregten Elektromotor 2 dar, welcher beispielsweise als ein bürstenloser Gleichstrommotor (BLDC) oder als ein Permanentmagnet-Synchronmotor (PMSM) ausgeführt ist.

Die Elektromaschine 1 weist eine um eine Rotationsachse 14 rotierende Welle 5 auf. Mit der Welle 5, die beispielsweise aus Stahl besteht, ist ein Nabenkörper 8 drehfest verbunden, an welchem zum einen Segmente 9 eines Rotorkörpers 10 und zum andern Permanentmagnete 15 gehalten sind. Die Segmente 9 bestehen beispielsweise aus Stahl oder beinhalten Stahl und sind in Bezug auf die Rotationsachse 14 speichenartig oder in radialer Richtung angeordnet. Vorzugsweise besteht der Rotorkörper 10 ausschließlich aus den beispielsweise separaten Segmenten 9.

Die bevorzugt separaten Segmente 9 können insbesondere durch in axialer Richtung der Rotationsachse 14 übereinander zu einem Lamellenpaket angeordnete oder geschichtete Lamellen 16 gebildet werden. Der Rotorkörper 10 bzw. die Lamellen 16 bzw. das Lamellenpaket weisen (weist) radiale Ausnehmungen 13 auf, in denen Permanentmagnete 15 angeordnet sind. Der Nabenkörper 8 ist mit der Welle 5 zumindest drehfest verbunden und trägt den Rotorkörper 10 drehfest. Der Nabenkörper 8 kann aus einem diamagnetischen und/oder paramagnetischen Material bestehen, insbesondere aus Aluminium. Ein Rotor 4 der Elektromaschine 1 umfasst somit die Welle 5, die Permanentmagnete 15, den Rotorkörper 10, hier insbesondere als Segmente 9 aus Lamellen 16 und den Nabenkörper 8.

Die Welle 5 ist mittels einer hier aus Maßstabsgründen nicht gezeigten Lagerung an einem hier aus Maßstabsgründen ebenfalls nicht gezeigten Gehäuse der Elektromaschine 1 gelagert. An dem Gehäuse ist ein hier abgebrochen dargestellter Stator 17 mit Elektromagneten 18 angeordnet. Zwischen dem Stator 17 und dem Rotor 4 ist ein Luftspalt 21 ausgebildet.

An einer radial äußeren Umfangsfläche des Rotorkörpers 10 sind beispielsweise Öffnungen 24 ausgebildet, welche einerseits in die Ausnehmungen 13 und andererseits in den Luftspalt 21 münden. In den Öffnungen 24 sind insbesondere keine magnetisch leitfähigen Elemente angeordnet oder vorhanden. Die Öffnungen 24 sind daher an oder in einer radial äußeren Umfangsfläche 30 des Rotorkörpers 10 des Rotors 4 ausgebildet.

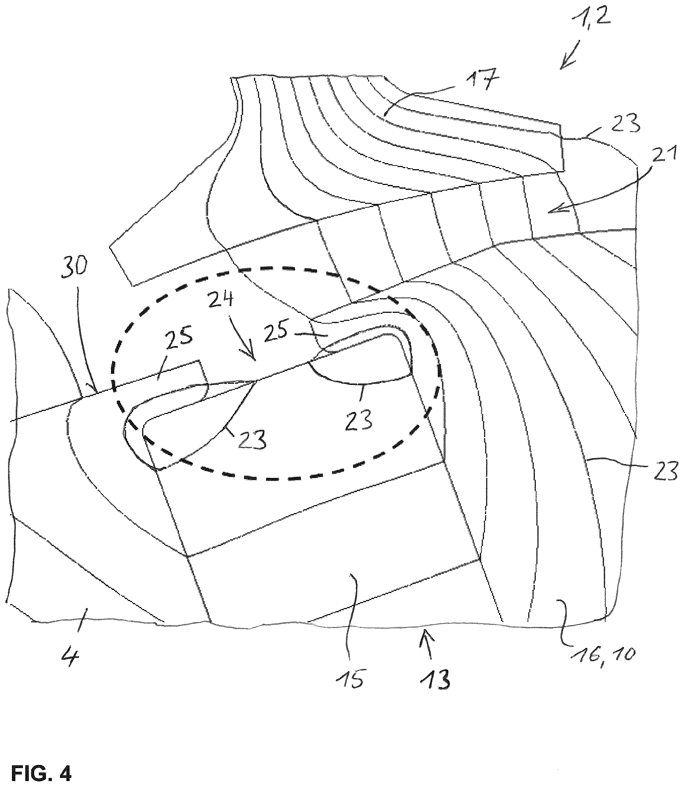

Wie insbesondere **Fig. 4** zeigt, springt ein jeweils bevorzugt umlaufender Rand 25 der Öffnungen 24 dabei jeweils derart radial vor, dass die in den Ausnehmungen 13 aufgenommenen Permanentmagnete 15 jeweils teilweise übergriffen werden, insbesondere unter Freilassen der betreffenden Öffnung 24 durch den betreffenden Rand 25. Durch die Ränder 25 der Öffnungen 24 sind daher die Permanentmagneten 15 an ihren radial äußeren Enden in den Ausnehmungen 13 formschlüssig gehalten oder gekontert. Die radial inneren Enden der Permanentmagneten 15 können aus den Ausnehmungen 13 des Rotorkörpers 10 nach radial innen hin herausragen und den Nabenkörper 8 kontaktieren. Dann sind die Permanentmagneten 15 radial außen durch die Ränder 25 der Öffnungen 24 und radial innen durch den Nabenkörper 8 fixiert. Die Ausnehmungen 13 in dem Rotorkörper 10 können sich, wie in **Fig. 3** gezeigt, beispielsweise von dem Nabenkörper 8 bis zu den Öffnungen 24 im Rotorkörper 10 erstecken. Weiterhin sind die Permanentmagneten 15 und die Ausnehmungen 13 in dem Rotorkörper beispielsweise speichenartig um die Rotationsachse 14 des Rotors 4 angeordnet.

Die Segmente 9 des Rotorkörpers 10 bestehen aus wenigstens einem Metall, vorzugsweise aus Stahl und sind in Umfangsrichtung des Rotors 4 gesehen jeweils zwei benachbarten Permanentmagneten 15 zwischengeordnet. Weiterhin sind in Umfangsrichtung des Rotors 4 gesehen die Permanentmagneten 15 jeweils zwei benachbarten Segmenten zwischengeordnet.

Wie aus **Fig. 3** hervorgeht, können die Segmente 9 an ihrer radial inneren Umfangsfläche mit dem Nabenkörper 8 verbunden sein. Insbesondere können die Segmente 9 mit dem Nabenkörper 8 formschlüssig und/oder kraftschlüssig (z.B. durch Verschraubungen oder Klemmungen) und/oder stoffschlüssig (z.B. durch Klebungen) verbunden sein.

Zur Ausbildung einer formschlüssigen Verbindung zwischen dem Nabenkörper 8 und den Segmenten 9 kann der Nabenkörper 8, wie in **Fig. 3** gezeigt, radial äußere Haken 26 aufweisen, welche mit komplementär hakenförmig geformten Aussparungen 27 an der radial inneren Umfangsfläche der Segmente 9 derart zusammenwirken, dass zwischen den Haken 26 und den Aussparungen 27 jeweils ein Formschluss mit hinterschnittenem Querschnitt ausgebildet wird. Die Haken 26 ragen insbesondere von dem Nabenkörper 8 nach radial außen weg.

**Fig. 4** zeigt magnetische Flusslinien 23 des Magnetfelds des in der dort gezeigten Ausnehmung 13 aufgenommenen Permanentmagneten 15. Daraus geht hervor, dass die magnetischen Flusslinien 23 mangels einer oben beschriebenen Brücke, welche in dem durch den gestrichelten Kreis gekennzeichneten Bereich beim Stand der Technik vorhanden ist, und aufgrund der radial äußeren Öffnung 24 im Rotorkörper 10 bzw. in der Ausnehmung 13, welche zum Luftspalt 21 hinweist, zumindest radial außen keine Verbindungen untereinander eingehen können bzw. unterbrochen werden. Dadurch wird der magnetische Streufluss verringert und damit der Wirkungsgrad des permanent erregten Elektromotors 1 verbessert.

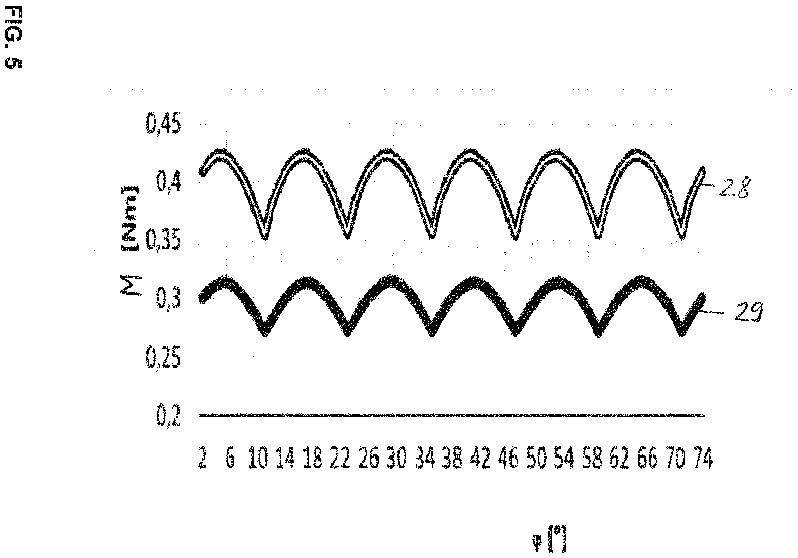

**Fig. 5** zeigt ein Diagramm, in welchem ein Zusammenhang zwischen einem von dem permanent erregten Elektromotor 1 gemäß der Erfindung erzeugten Drehmoment M und einer Winkelposition ϕ des Rotors 4 durch eine innen offene Linie 28 dargestellt ist. Mit einer geschlossenen Linie 29 ist derselbe Zusammenhang bei einem permanent erregten Elektromotor des Stands der Technik gezeigt, welcher die eingangserwähnten Brücken 22 im Rotorkörper aufweist **(****Fig. 1****,** **Fig. 2****).** Es kann festgestellt werden, dass das Drehmoment M des permanent erregten Elektromotors 1 gemäß der Erfindung für alle Winkelpositionen ϕ des Rotors 4 größer ist als das Drehmoment M eines Elektromotors des Stands der Technik.

### Bezugszeichenliste

- 1: Elektromaschine
- 2: Elektromotor
- 3: Generator
- 4: Rotor
- 5: Welle
- 6: Auswuchtscheibe
- 7: Aussparung
- 8: Nabenkörper
- 9: Segmente
- 10: Rotorkörper
- 11: erster Endabschnitt
- 12: zweiter Endabschnitt
- 13: Ausnehmungen
- 14: Rotationsachse
- 15: Permanentmagnete
- 16: Lamellen
- 17: Stator
- 18: Elektromagneten
- 19: Wälzlagerung
- 20: Gehäuse
- 21: Luftspalt
- 22: Brücken
- 23: magnetische Flusslinien
- 24: Öffnungen
- 25: Rand
- 26: Haken
- 27: Aussparungen
- 28: offene Linie
- 29: geschlossene Linie
- 30: radial äußere Umfangsfläche
- M: Drehmoment
- Φ: Winkelposition Rotor

## Patentansprüche

1. Permanenterregte Elektromaschine (1), beinhaltend einen Stator (17) und einen innerhalb des Stators (17) zusammen mit einer Welle (5) um eine Rotationsachse (14) drehbaren Rotor, wobei zwischen einer radial äußeren Umfangsfläche (30) des Rotors (4) und einer radial inneren Umfangsfläche des Stators (17) ein Luftspalt (21) ausgebildet ist, und wobei in einem Rotorkörper (10) des Rotors (4) Ausnehmungen (13) ausgebildet sind, und in wenigstens einigen der Ausnehmungen (13) Permanentmagnete (15) aufgenommen sind, **dadurch gekennzeichnet, dass** die Ausnehmungen (13), in welchen Permanentmagnete (15) aufgenommen sind, zum Luftspalt (21) hin offen sind.

2. Permanenterregte Elektromaschine nach Anspruch 1, **dadurch gekennzeichnet, dass** an einer äußeren Umfangsfläche (30) des Rotorkörpers (10) Öffnungen (24) ausgebildet sind, welche einerseits in die Ausnehmungen (13) und andererseits in den Luftspalt (21) münden.

3. Permanenterregte Elektromaschine nach Anspruch 2, **dadurch gekennzeichnet, dass** ein Rand (25) der Öffnungen (24) jeweils derart radial vorspringt, dass der die in den Ausnehmungen (13) aufgenommenen Permanentmagneten (15) jeweils teilweise übergriffen werden.

4. Permanenterregte Elektromaschine nach einem der vorhergehenden Ansprüche, **dadurch gekennzeichnet, dass** die Permanentmagneten (15) speichenartig um die Rotationsachse (14) des Rotors (4) angeordnet sind.

5. Permanenterregte Elektromaschine nach einem der vorhergehenden Ansprüche, **dadurch gekennzeichnet, dass** der Rotorkörper (10) Segmente (9) aus wenigstens einem Metall umfasst, welche speichenartig um die Rotationsachse (14) des Rotors (4) angeordnet und in Umfangsrichtung des Rotors gesehen den Permanentmagneten (15) zwischengeordnet sind.

6. Permanenterregte Elektromaschine nach Anspruch 5, **dadurch gekennzeichnet, dass** die Segmente (9) separate Segmente sind.

7. Permanenterregte Elektromaschine nach Anspruch 5 oder 6, **dadurch gekennzeichnet, dass** die Segmente (9) jeweils aus mehreren Lamellen bestehen, die in Richtung der Rotationsachse (14) gesehen zu Lamellenpaketen geschichtet sind.

8. Permanenterregte Elektromaschine nach einem der Ansprüche 5 bis 7, **dadurch gekennzeichnet, dass** die Segmente (9) aus Stahl bestehen oder Stahl beinhalten.

9. Permanenterregte Elektromaschine nach einem der Ansprüche 5 bis 8, **dadurch gekennzeichnet, dass** die Segmente (9) an ihrer radial inneren Umfangsfläche mit einem Nabenkörper (8) verbunden sind, welcher mit der Welle (5) zumindest drehfest verbunden ist.

10. Permanenterregte Elektromaschine nach Anspruch 9, **dadurch gekennzeichnet, dass** die Segmente (9) mit dem Nabenkörper (8) formschlüssig und/oder kraftschlüssig und/oder stoffschlüssig verbunden sind.

11. Permanenterregte Elektromaschine nach Anspruch 10, **dadurch gekennzeichnet, dass** der Nabenkörper (9) radial äußere Haken (26) aufweist, welche mit komplementär hakenförmig geformten Aussparungen (27) an der radial inneren Umfangsfläche der Segmente (9) derart zusammenwirken, dass zwischen den Haken (26) und den Aussparungen (27) jeweils ein Formschluss mit hinterschnittenem Querschnitt ausgebildet ist.

12. Permanenterregte Elektromaschine nach einem der Ansprüche 9 bis 11, **dadurch gekennzeichnet, dass** der Nabenkörper (8) aus einem diamagnetischen und/oder paramagnetischen Material besteht.

13. Permanenterregte Elektromaschine nach Anspruch 12, **dadurch gekennzeichnet, dass** der Nabenkörper (8) aus Aluminium besteht.

14. Permanenterregte Elektromaschine nach einem der vorhergehenden Ansprüche, **dadurch gekennzeichnet, dass** sie durch einen bürstenlosen Gleichstrommotor (BLDC) gebildet wird.

15. Permanenterregte Elektromaschine nach einem der vorhergehenden Ansprüche, **dadurch gekennzeichnet, dass** sie durch einen Permanentmagnet-Synchronmotor (PMSM) gebildet wird.

16. Fahrzeug mit einer permanenterregten Elektromaschine nach wenigstens einem der vorhergehenden Ansprüche.
